(19) **Europäisches Patentamt**
**European Patent Office**
**Office européen des brevets**

(11) **EP 1 710 942 B1**

(12) **EUROPEAN PATENT SPECIFICATION**

(45) Date of publication and mention
of the grant of the patent:
**07.11.2007 Bulletin 2007/45**

(51) Int Cl.:
*H04L 1/00* (2006.01)        *H04L 29/06* (2006.01)

(21) Application number: **06117790.3**

(22) Date of filing: **22.03.2000**

(54) **Method and devices for digital data transfer**

Verfahren und Einrichtungen zur digitalen Datenübertragung

Procédé et dispositifs de transfert de données numériques

(84) Designated Contracting States:
**AT BE CH CY DE DK ES FI FR GB GR IE IT LI LU MC NL PT SE**

(30) Priority: **01.04.1999 FI 990743**

(43) Date of publication of application:
**11.10.2006 Bulletin 2006/41**

(62) Document number(s) of the earlier application(s) in accordance with Art. 76 EPC:
**00914201.9 / 1 169 801**

(73) Proprietor: **Nokia Corporation**
**02150 Espoo (FI)**

(72) Inventors:
• **Turunen, Matti**
**FIN-33700, Tampere (FI)**
• **Kalliokulju, Juha**
**FIN-37470, Vesilahti (FI)**
• **Haumont, Serge**
**FIN-00320, Helsinki (FI)**
• **Leon, David**
**33000 Bordeaux (FR)**

(74) Representative: **Söderholm, Sampsa Petteri et al**
**Espatent Oy**
**Kaivokatu 10 A**
**00100 Helsinki (FI)**

(56) References cited:
**US-A- 5 309 450        US-A- 5 870 412**

• **MAMAIS G ET AL: "Evaluation of the Casner-Jacobson Algorithm for Compressing the RTP/UDP/IP Headers" THIRD IEEE SYMPOSIUM OF COMPUTERS AND COMM. 1998. ISCC '98. PROCEEDINGS, 1998, 1998, pages 543-548, XP002901178**
• **JACOBSON V: "Compressing IPUDPRTP Headers for Low-Speed Serial Links" S. CASNER CISCO SYSTEMS, [Online] February 1999 (1999-02), pages 1-20, XP002901179 Retrieved from the Internet: URL:www.cis.ohio-state.edu/htbin/rtc2508.h tml> [retrieved on 2000-08-08]**
• **JACOBSON V: "Compressing TCP/IP Headers for Low-Speed Serial Links" LBL, 1990, [Online] February 1990 (1990-02), pages 1-29, XP002901180 Retrieved from the Internet: URL: http://194.52.182.96/rfc/rfc 1144.html> [retrieved on 2000-08-08]**
• **DRAVIDA S ET AL: "Error performance of IEEE 802.6 metropolitan area networks" INFOCOM '90, NINTH ANNUAL JOINT CONF. OF THE IEEE COMP. AND COMM. SOC. THE MULTIPLE FACETS OF INTEGRATION. PROCEEDINGS, IEEE, 1990, vol. 1, 3 June 1990 (1990-06-03), pages 105-115, XP002901181**

EP 1 710 942 B1

## Description

The present invention relates to digital data transfer, especially to compression and error correction of data packets of packet mode digital data transfer in a digital mobile telephone network.

For digital data transfer it is often necessary to divide the information into packets of a certain size prior to transferring the data. Each packet comprises a certain number of bits. One part of the bits forms a payload of a packet and another part of the bits forms a header of a packet containing certain control information. In the Internet a server transferring data packets uses the headers for routing packets to their correct destinations. The protocols used to control the packets during their transfer in the Internet are TCP (Transmission Control Protocol), UDP (User Datagram Protocol) and IP (Internet Protocol). These protocols define how the data is assembled in different packets and how each packet is routed from one node to another on the way to its destination. Packet mode data transfer has certain benefits and is therefore planned to be used in the forthcoming wireless standards UMTS and GPRS (UMTS, Universal Mobile Telephone System, GPRS, General Packet Radio System). Wireless data transfer is increasing rapidly as people want to communicate and be reached independent of their location. Wireless digital networks, e.g. GSM, enable connecting a mobile telephone to another mobile telephone or to public switched telephone networks (PSTN) or other networks like ISDN (integrated services digital network). Wireless mobile telephone networks (MNW) connected to a PSTN are well known e.g. from the GSM (Global System for Mobile communications). A MNW allows a user to communicate virtually anywhere and even while travelling, e.g. in a train. It is an object of future wireless networks to support also transfer of motion video for video conferencing over radio links.

A specific Real Time Protocol (RTP) is designed for transfer of real-time data. This allows real-time communication over a packet mode connection such as video conferencing over an Internet connection and so called Internet telephone calls.

RTP may be used with UDP and IP as IP/UDP/ RTP. Video and audio data are encapsulated in RTP (Real Time Protocol) packets which are in turn encapsulated in UDP (User Datagram Protocol) and IP (Internet Protocol) datagrams. The Real-time Transfer Protocol (RTP) is designed for real-time traffic over both Intra- and Internets. RTP functions include loss detection for quality estimation and rate adaption, sequencing of data, intra- and intermedia synchronisation, source identification, and basic membership information. RTP is designed to operate on any kind of network-protocol and is therefore completely self-contained, meaning that it does not depend on any information in the lower levels of the network model. RTP is only implemented over IP/UDP today, but the protocol can be used on any type of packet-network, e.g. native ATM or ISDN. The RTP header has 12 octets, the UDP header 8 octets and the IP header 20 octets of bits. The total overhead is thus 40 octets of bits per IP datagram. Due to the fact that RTP packets often carry only small amounts of payload data, the proportion of the header information is high and a large part of the available bandwidth has to be allocated to the overhead.

The quality of both audio and video communication achievable is dependent on the maximum data transmission rate i.e. bandwidth available. Common audio CD-quality requires a bandwidth of 150 kBytes/second if no compression of the audio data i.e. payload is used. Even using the efficient MPEG 1 audio layer 3 i.e. MP3 audio compression, a bandwidth of approximately 15 kBytes/s i.e. 120 kBits/s is required. It is difficult to achieve good quality in a real-time connection capable for, say, 57,6 kbits/sec bandwidth with a wired V.90 modem or 9,6 kbits/sec bandwidth with a GSM terminal. Increasing the data transfer rate is one of the major targets in data transfer overall, and especially in wireless communication. One way to boost the data transfer rate is to expand the size of data packets and thus to reduce the overhead caused by headers. However, increasing the packet size leads to longer delays in data transfer, which is in contradiction with the general objectives of data transfer in general and especially for real-time data transfer. Also the chance of bit errors affecting the payload becomes more likely in large packets. Another method to boost transmission utilises compression of data packets using algebraic algorithms to encode the data to be transferred into a reduced number of bits. This yields faster communication as the number of bits for transmission decreases. The payload may be compressed using payload type specific compression algorithms and some header specific form may be applied to the headers of the packets. In these methods the header and the payload are compressed separately, because the header has in some cases such characteristics that allow more powerful compression when the header is compressed alone. It is also easier to decompress the header again for further routing when the payload and header are compressed independently.

In the Internet, sequentially sent data packets may be routed via different nodes. This enables use of plurality of parallel data connections between the sender and the recipient. Fixed packet-switched networks have a high data bandwidth. On the other hand, data packets may not arrive at their destination in the same order in which they were sent, because sequential packets may be routed via different nodes and the data bandwidth may differ from one route to another. It is therefore necessary to include complete information concerning the destination in each data packet. For these reasons, the header must contain a certain amount of information, but the size of the headers is usually not a problem thanks to the high data bandwidth. However, problems arise if packets have to be transmitted on a serial link with a low bandwidth. This is often the case when a home user accesses access points of the network, e.g. using a personal computer.

Such access links are typically telephone line modems, which have been used for several years, and more recently wireless connections. In the particular case of GSM, data connections, HSCSD (High Speed Circuit Switched Data) and GPRS are all examples of serial links. Due to their serial nature, these kind of links, as opposed to core packet-switched networks, have the property that packets are received in the order they were sent. There is no way a packet may overtake its predecessor, because each packet is transferred in sequence. This sequential reception of data packets and the properties of packets in the common TCP/IP protocol enable compression of the header data very efficiently using header compression protocols.

The publications: "Compressing TCP/IP Headers for Low-Speed Serial Links" by V. Jacobson, February 1990 and "Compressing IP/UDP/RTP Headers for Low -Speed Serial Links" by S. Casner and V. Jacobson, July 27, 1998 describe methods for compressing headers of data packets. The latter of the two publications claims that it is even possible to achieve compression from 40 bytes of the original header down to 3 bytes. The idea behind efficient compression of headers is based on the characteristics of TCP/IP headers, which have certain usually constant behaviour. Firstly, one part of the header remains constant during the entire connection. Secondly, another part of the header consistently changes from one packet to another, allowing inter coding. The change can be consistent, but even if it is not, encoding the difference between specific parts of headers of sequential packets requires less information than sending the absolute values of these parts. Encoding data utilising constantly changing behaviour of the data is known as inter coding. In the publication of Casner and Jacobson it is however mentioned that the compression scheme presented performs best on local links with low round-trip-time, which is not the case in usual digital mobile networks.

In effect, serial transmission and reception of packets enables the efficient use of inter coding of a series of headers. To understand what inter coding is, consider the simple example of differential (or delta) encoding. Instead of transmitting a series of numbers a, b, c, d, e, etc. the sequence a'=a, b'=b-a, c'=c-b,.. is transmitted. Encoding the difference requires lower resolution i.e. data word length than encoding the absolute values, thus saving again some bits. However, the weakness of such a scheme is that if one of the inter coded headers is lost, the packet associated with it and all following packets will be lost. To recover from the damage of the header there are two methods: 1) Sending periodically a data packet without header compression to refresh the series of headers i.e. to re-initiate inter coding and 2) refreshing the series of headers on demand when a loss is detected.

Periodical refresh of the series of headers wastes some of the compression benefit by forcing packets to be sent uncompressed even when there is no need for that. Refresh on demand is based on an acknowledgement mechanism. The recipient indicates whether the header of the received data packet is corrupted. Use of acknowledgements may be satisfactory for modem links but is not sufficiently suited for wireless links for the following reasons:

- The error rate is typically several orders of magnitude higher in wireless transmission than in fixed networks. Motion of the mobile station increases the likelihood of errors due to the changes in radio coverage and Doppler shift. The Doppler shift causes a change in the radio frequency in the reception of radio data and causes data corruption when the movement is rapid, e.g. when the receiver is used in a moving train.

- The packet round-trip delay is considerable because of interleaving, even up to several hundreds of ms. Interleaving in this context means that prior to transmitting the data, channel encoding may spread the data bits of single data packet between two or more blocks of packets. Thus, gathering the complete data for an entire packet may require reception of two or more blocks, which are combined to produce the original packets in their correct order. This adds a significant delay.

Correcting for packet loss using retransmissions causes a delay in data transfer. Delays are most harmful for two-way communication. In a unidirectional audio connection such as listening to sound clips or messages from a remote answering machine, the receiver can adapt to the variability in the delay. Delays of even a few hundreds of milliseconds can interfere with the flow of conversation in a two-way link. If header compression by intercoding is used, there is a risk that an entire sequence of packets may be lost due to corruption of a single header (as explained earlier). Therefore header compression is barely suitable in real-time communication such as video conferencing over a radio interface. Radio links are susceptible to radio interference and can have a bit error rate up to $10^{-4}$ whereas corresponding figure for PSTN is typically less than $10^{-7}$. An error in any one of the bytes of a compressed header may cause the entire packet to be lost, because without the header the packet cannot be routed to its destination. Such vulnerability is a major disadvantage and restricts the use of header compression for e.g. real-time motion video and/or voice transfer. When transferring stored files, retransmission of failed packets is possible. In real-time communication each packet is used as soon as possible after reception to minimise the data transfer delay. If one packet is missed, it cannot be used any more after reception of the next packet because the time has lapsed when that information was to be represented for the recipient. On the other hand off-line transmission can utilise large data packets as the cycle time is not critical and this inherently reduces the overhead due to the header data. Thus, in the case of file transfer, it is not as necessary as in real-time communication to reduce the size of the header. One typical example of an error-prone communication channel is a radio link between a mobile communication station like a GSM-handset and a base station.

For the reasons given above, in the case of the mobile telecommunication, inter coding of headers is currently considered to be inappropriate for real-time operation like RTP even if either one of the two methods to re-initiate inter coding is used.

However, it would be nevertheless beneficial if header compression could be applied in real-time communication, particularly as the amount of bandwidth required to transmit uncompressed headers is significant compared with that required to transmit the packet payload (data). In their publication, Casner and Jacobson addressed the same problem, giving figures of 20 bytes for the payload and 12 bytes for an RTP header. Referring to those figures the overhead caused by the header is 12 bytes/20 bytes = 60 %. It is thus obvious, that there is a great desire to enable use of header compression also over data links subject to corruption.

In "Evaluation of the Casner-Jacobson Algorithm for Compressing the RTP/UDP/IP Headers", Third IEEE symposium of computers and comm.. 1998. ISCC '98. proceedings, pages 543-548, Mamais et al. have evaluated Casner-Jacobson RTP/UDP/IP header compression algorithm in noisy links. The paper concludes that the Casner-Jacobson algorithm should not be recommended for transfers with guaranteed quality in transmission channels with long round-trip delays and high error rates. However, Mamais et al. continue that the performance of a particular link will be improved by using the Casner-Jacobson algorithm and if the error rates are low, then most of the problems discussed in the document can be avoided.

A new method and devices for error tolerant data packet transfer have now been invented. According to the present invention, the header of a packet is first compressed and thereafter protected to some extent against bit errors using Forward Error Correction (FEC). This enlarges the size of the header by some amount due to the introduction of forward error correction information, but enables at least recovery of headers corrupted by one bit error during transfer. It should be noted, that although any form of forward error correction involving adding redundancy has previously been avoided in order to allocate the maximum proportion of the bandwidth to transfer the actual payload, using forward error correction to protect compressed headers against bit errors actually provides an overall improvement in data transfer rate. The method can be implemented, for example, in telecommunication devices intended for use in packet switched radio networks like GPRS.

The method introduced by this invention utilises header compression followed by forward error correction (FEC) coding of the compressed header. Here the concept of "forward error correction" coding means adding redundancy bits to enable recovery of corrupted data using the redundant bits without necessarily having to retransmit data. Use of FEC to protect headers enables recovery of a compressed header having a certain number of bit errors. The maximum number of recoverable errors in the header depends on the FEC algorithm used and the number of redundant bits added to the compressed header. Even though use of FEC adds redundancy, data transfer efficiency over error prone radio links improves more than FEC redundancy impairs it and thus the practical transfer rate improves. This is especially advantageous in real-time communication over a error-prone communication channel such as a mobile communications system, but in general this is useful when the bandwidth of a communication channel is limited, as usual in radio communication, or over a fixed telephone/modem link. The present invention is even more advantageous for low bit rate real-time communication over an error-prone communication channel. With low-speed and error-prone communications, the influence of errors is most considerable when they occur in any of the bits of a compressed header of a data packet.

Still advantageous to the invention, if one bit error affects the packet, instead of loosing all the rest of the stream until the next refresh, it will be possible:

- To first of all detect if the bit error has affected the header or the payload (e.g. audio, video or data). If it is only the payload, it can be decided to either discard the payload or apply some forward error correction. In any case, the packets following thereafter can be used since the inter coded header is intact.
- If the compressed header is itself damaged, the added forward error correction bits can be used to attempt recovery of the original header, and if the recovery succeeds, the data stream can be used, lowering the probability that a refresh (retransmission of an entire packet without compression) is needed. Efficiently protecting the bits of a compressed header is reasonable since after compression the header typically consists of only of a few bytes, and although certain amount of redundancy is introduced this may make it unnecessary to retransmit entire data packets. This may significantly reduce the amount of data to be retransmitted and will result in a significant improvement in a two-way communication by reducing the number of disturbing pauses in the video/audio reception.

According to a first aspect of the invention a method is provided for transmitting and further receiving a digital data packet over a transmission path subject to data corruption as set forth in the appended claim 1.

According to a second aspect of the invention a method is provided for transmitting a digital data packet over a transmission path subject to data corruption as set forth in the appended claim 2.

According to a third aspect of the invention a method is provided for receiving a compressed digital data packet comprising a header and a payload as set forth in the appended claim 3.

According to a fourth aspect of the invention digital radio telephone network is provided as set forth in the appended claim 6.

According to a fifth aspect of the invention a digital data transmitter is provided for transmitting a digital data packet over a transmission path subject to data corruption as set forth in the appended claim 10.

According to a sixth aspect of the invention digital data receiver is provided for receiving a digital data packet sent over a digital transmission path subject to data corruption as set forth in the appended claim 13.

According to a seventh aspect of the invention a mobile station is provided as set forth in the appended claim 17.

According to an eighth aspect of the invention a packet data network element is provided for error resilient communications as set forth in the appended claim 24.

According to a ninth aspect of the invention a packet data network element is provided as set forth in the appended claim 28.

The invention will now be described by way of example with reference to the drawings in which:

Figure 1    shows telecommunication network connections in the packet switched GPRS network known from prior art;

Figure 2    is a diagram of simplified data flow over a packet switched radio link subject to data corruption known from prior art;

Figure 3    is a diagram of a digital data packet known from prior art;

Figure 4    is a block diagram of the parts of a mobile station according to an embodiment of the present invention;

Figure 5    is a diagram of a compressed header known from prior art;

Figure 6    is an example scheme of locations of forward error correction bits in relation to the bits they are intended to protect according to an embodiment of the invention;

Figure 7    is a diagram of an example of construction of a compressed and then FEC encoded header, damaging of a compressed and FEC encoded header and further reconstruction of a damaged header according to an embodiment of the invention;

Figure 8    is a diagram of the bytes of a compressed and forward error encoded header in accordance with an embodiment of the invention; and

Figure 9    is a diagram of a compressed and forward error encoded header in accordance with figure 8.

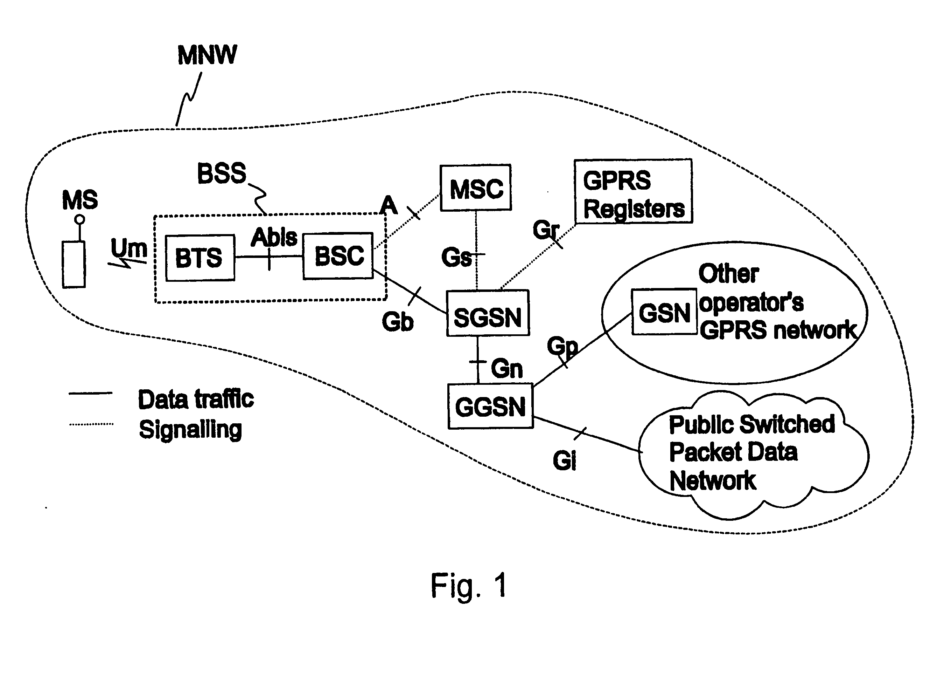

Figure 1 presents telecommunication network connections in a typical packet switched GPRS network. The main element of the GPRS network infrastructure is a GPRS support node, a so called GSN. It is a mobility router that effects the connection and co-operation with the different data networks, e.g. with the public packet data network PSPDN (Public Switched Packet Data Network) through connection Gi or with another operator's GPRS network through connection Gp, mobility management by GPRS registers through connection Gr and relaying of data packets to mobile stations independent of their locations. Physically, a GPRS Support Node GSN can be integrated into an MSC (Mobile Switching Center) or it can be a separate network element based in the architecture of data network routers. User data passes directly through connection Gb between the support node GSN and the Base Station System BSS, which consists of Base Stations BTS and Base Station Controllers BSC, but between the support node GSN and the Mobile Switching Center MSC there is the signalling connection Gs. The solid lines between blocks represent data traffic and the dashed lines represent signalling. Physically, the data can pass transparently through the Mobile Switching Center MSC. The radio interface between the Base Station BTS and the mobile station MS is marked by reference Um. The references Abis and A represent the interface between the Base Station BTS and the Base Station Controller BSC and the interface between the Base Station Controller BSC and the Mobile Switching Center MSC, which is a signalling connection. The reference Gn represents the connection between different support nodes within the same operator's network. The support nodes are usually classified as gateway support nodes GGSN (Gateway GSN) and serving or home support nodes SGSN (Serving GSN) as presented in figure 1.

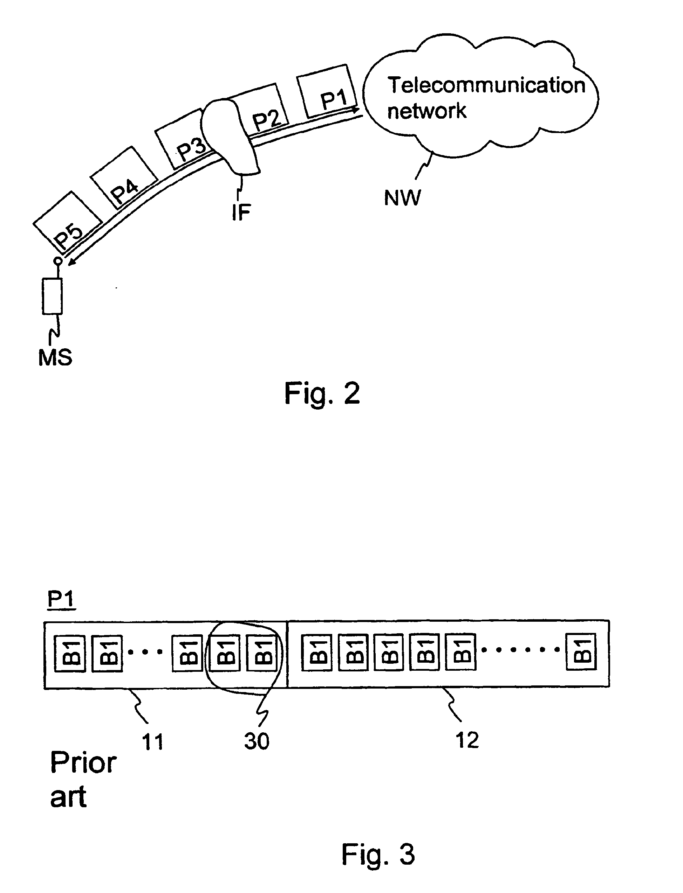

Figure 2 shows a simplified diagram of data flow over a packet switched radio link subject to data corruption, known from prior art. For simplicity it is assumed that interleaving is not used in the radio connection between the mobile station MS and the telecommunication network NW. Thus each packet is assumed to be transmitted in its entirety in a separate frame. This is in contrast with the normal situation, for example in real GPRS data connections, where it is customary to interleave the bits of each data packet, dividing them into different frames.

Interleaving as such is well known from prior art to those normally skilled in the art. For description of the invention it is irrelevant whether each packet is sent as such or interleaved into different packets. Even when interleaved, the header, as well as the payload of a packet, may be corrupted during the data transfer and the corruption has the same impact as described earlier.

As shown in figure 2, a mobile station MS sends a radio signal formed by a stream of RTP data packets P1 to P5 over a radio link to a telecommunication network NW. The network normally comprises a terminal receiving the data (not shown). The data stream comprises a number of sequential data packets, each comprising a certain number of bits. Some of the bits are required for controlling the routing of each packet, and other bits carry the actual information (payload) to be transferred. In the example shown in figure 2, it is assumed that during the transfer there is a short period of interference affecting the data of packets P2 and P3. It is now supposed, that the errors caused in packet 2 affect only its payload, and the header of packet P3 becomes corrupted. The corruption of payload impairs the quality of the data received, but audio and/or video coding algorithms, e.g. error detection, correction and concealment algorithms, can be applied to reduce the impact of errors in the payload. However, corruption of header of packet 3 will render the entire packet useless as the control information for routing the packet to its destination is lost or becomes invalid. Furthermore, if an inter coding method is used to compress the headers, all following packets will also become unusable until the MS receives an acknowledgement informing it of a failure to receive the packets P3 to P5, or until the MS sends an uncompressed packet, that is a packet without inter coding, as a periodical refresh of inter coding. The number of missed packets depends on the cycle (round-trip) time i.e. time lapsed between transmitting a packet from the mobile and receiving the acknowledgement that a certain packet has not been correctly received. A typical value of the cycle time is 330 milliseconds. If packets are sent every 30 ms (a typical value) the average number of lost packets due to an error in packet header equals to 330 ms/30 ms = 11 packets. Or, expressed in time, there will be an interruption in the reception of data (e.g. audio and/or video data) for a time at least equal to the cycle time i.e. 330 ms.

Figure 3 illustrates a digital data packet P1 known from prior art. The packet comprises a header 11 and a payload 12. The header comprises an inter coded group of bits (30) forming at least part of the header data.

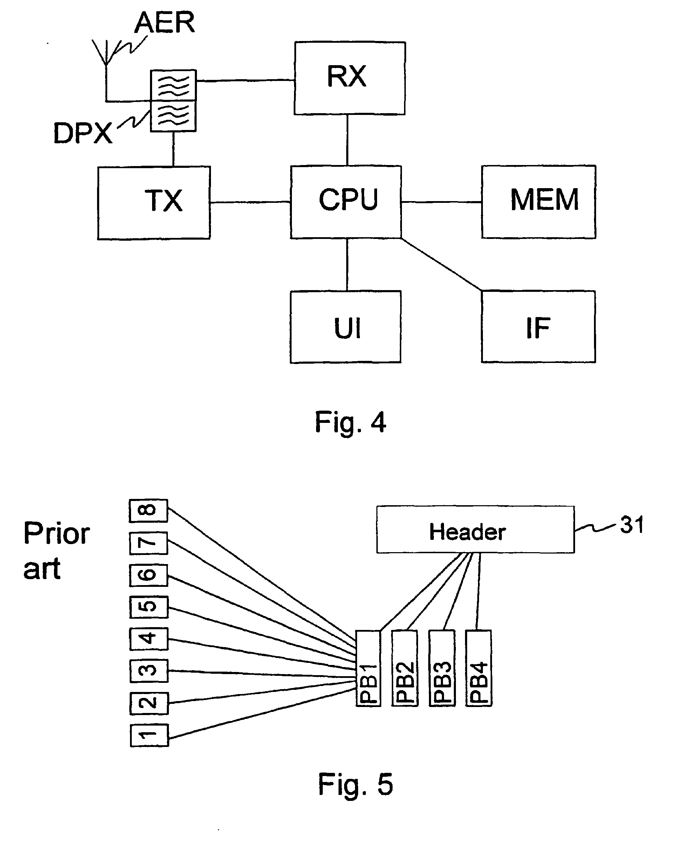

Figure 4 is a block diagram of the parts of a mobile station MS which are useful for describing the invention according to an embodiment of the present invention. The mobile station comprises a central processing unit CPU controlling the mobile station. The instructions for the CPU are stored in the memory MEM. For reception of data packets there is a receiver module RX connected to aerial AER via duplex filter DPX. For transmitting of data packets, the mobile station has a transmitter module TX connected to the aerial AER via the duplex filter. Additionally, there may be a user interface UI for user interaction and a data interface IF for connecting to an auxiliary device, e.g. a laptop computer. The CPU is arranged to organise the data to be sent into data packets and to form headers for the data packets. The CPU is also arranged to separate the useful data i.e. the payload from data packets received by the RX. Alternatively, processing of data packets may be performed by specific hardwired circuitry, a specific or shared digital signal processor (DSP) or any other equipment for data processing known from prior art.

Figure 5 illustrates a compressed header 31 consisting of four bytes, PB1, PB2, PB3 and PB4. The eight bit positions of the first byte PB1 of the compressed header 31 have reference numerals 1 to 8.

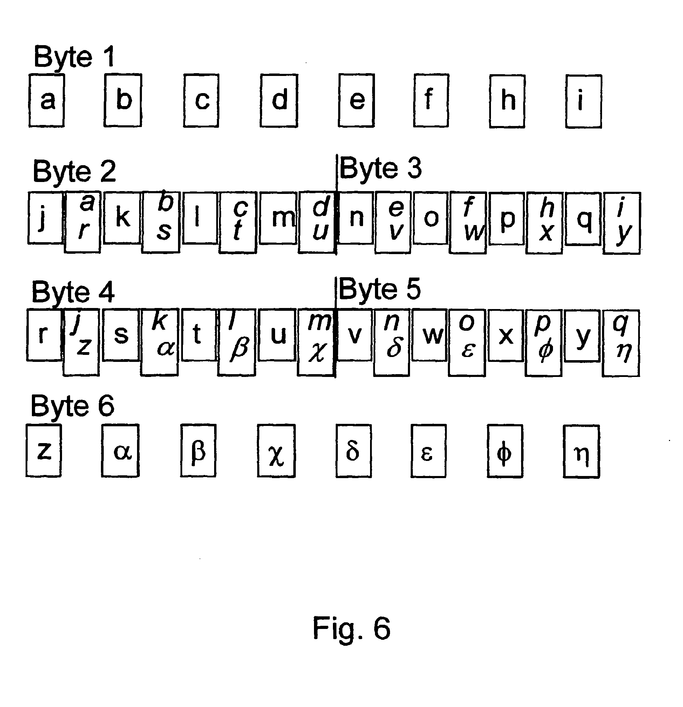

In a radio link there is a high likelihood of burst-type errors and therefore it should be appreciated that each forward error correction bit may be located on purpose far away from the bits of the header it is aimed to protect. One scheme would be to place the forward error correction bits among the header data at a constant distance from the bits they are computed from. A preferred option is to calculate the forward error correction bits from the bits of the header located far away from each other. This improves the chance that only one of the protected header bits is corrupted when they are attempted to recover by a common forward error correction data. Although there are number of ways to implement this, one example is given in figure 6.

In figure 6 a compressed header comprising 4 bytes i.e. 32 bits of header information is arranged in four rows of bits. In this example a parity bit is computed for every two bits of header data. In order to illustrate how the forward error correction bits relate to the other bits of the 4 bytes of this example, each bit position corresponding to a single bit is labelled sequentially with a letter from a to z and then from $\alpha$ to $\eta$. The total size of the header to be transferred is 6 bytes as the compressed header comprising 4 bytes is increased by 2 bytes for forward error correction. Starting from the second row, after each bit there is an forward error correction bit labelled with a combination of two characters representing two different bits. Each forward error correction bit is computed from a bit of the preceding byte and a bit of the following byte.

Thus bit j is followed by forward error correction bit $\frac{a}{r}$, which is computed from the bits a and r. Respectively, after bit k there is bit $\frac{b}{s}$ and so on. The bits a to i form byte 1, bits from j to $\frac{d}{u}$ form byte 2, bits from n to $\frac{i}{y}$ form byte 3, bits r to $\frac{m}{\chi}$ form byte 4, bits from v to $\frac{q}{h}$ form byte 5 and bits from z to $\eta$ form byte 6. When each of the six bytes are sent in sequence, the possible occurrence of a burst of errors could corrupt multiple bits in sequence and yet it would be possible to recover the contents of the header. For example, if the entire byte 2 would be corrupt or lost, that would mean corruption of four bits of the header and four forward error correction bits. As none of the corrupted forward error correction bits would refer to a corrupted header bit, losing the forward error correction bits of byte 2 would not harm recovery of the header bits of the same byte 2. Instead, the forward error correction bits to be used would be interleaved within byte 4 and thus could be used to recover the header bits j to m of the corrupted byte 2. The function for computation of forward error correction bit values can be for example an XOR function.

To indicate and/or recover from errors occurring in the payload, error detection and/or forward error correction encoding can also be focused to that part of a data packet.

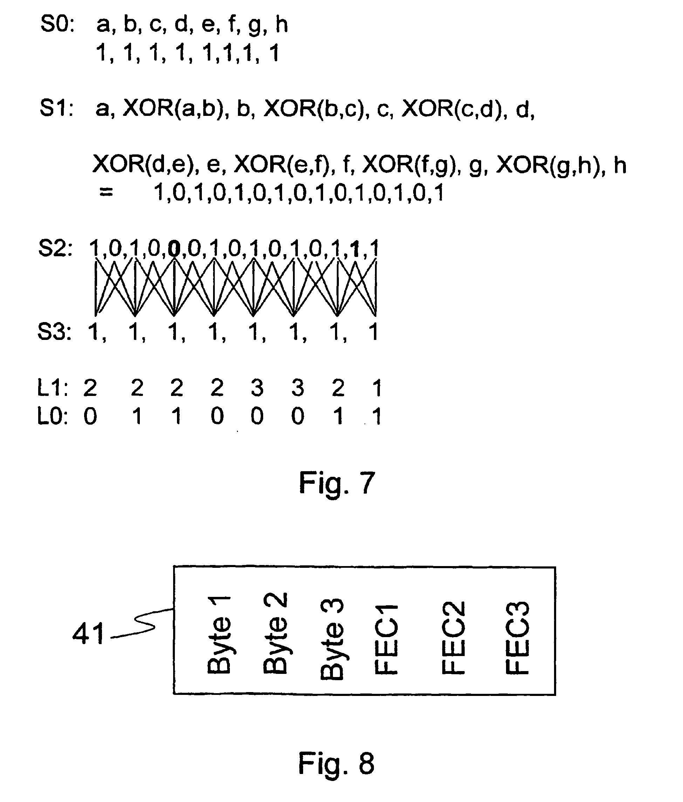

Figure 7 shows a diagram of an example of encoding of a header, damage caused by data transfer and further reconstruction of a damaged compressed header according to an embodiment of the invention. The bit positions of consecutive bits of a byte to be forward error correction encoded are referred to by letters a,b,c,d,e,f,g,h. The forward error correction encoding scheme is as follows: a, XOR(a,b), b, XOR(b,c), c, ... The scheme is illustrated with 8 bits i.e. one byte. The original sequence is S0. Each bit can have any of the two values, 0 and 1, but to simplify they are all set to 1. The encoded sequence is shown as sequence S1. Then an imaginary error has changed the value of the third encoded and the second last bit resulting in the sequence S2. Next the encoded bits of the header are FEC decoded. When the corrupted sequence S2 is received, the sequence S3 is computed using the added redundancy. To find out which bits are corrupted a likelihood analysis is performed.

Each of the bits has an equal probability to be inverted. Thus bit errors are equally likely to affect the compressed data content of the header or the parity bits included in the header. In order to determine whether a bit error has occurred during data transmission, it is necessary to examine the received bit stream. In this example between every two data bits of header there is a parity bit computed from these data bits. With the exception of the first and last data bits, the value of each data bit can be derived from three independent and equally reliable sources. For a certain data bit ($e$):

- The received data bit e as such has a certain first value.
- For certain data bit ($e$) the previous data bit ($d$) and the parity bit $\left(\genfrac{}{}{0pt}{}{d}{e}\right)$ between that certain data bit ($e$) and the previous data bit ($d$) indicate a second value for that certain data bit acting as the second source.
- The data bit ($f$) after the certain data bit ($e$) and the parity bit $\left(\genfrac{}{}{0pt}{}{e}{f}\right)$ indicate the third value for that certain data bit acting as the third source.

If all these three sources indicate to the same value for a certain data bit, it is probable that that data bit is correctly received (first value). In case that two of these bits support the first value it is also more likely that the first value is correct than incorrect. However, if both the second and third values differ from the first value, it is more probable that the first value is incorrect and it should be inverted to result in a value that is probably correct. For the first and last data bit this does not apply, because there are only two possible indications to decide on the correct value of the data bit. For these data bits it impossible to decide whether their values are correct as it is unsure whether the data bit in one of the ends of the sequence or the parity bit next to it is incorrect. Both of these bits have, again, an equal possibility to be incorrect. To protect all the data bits, the sequence of data bits could be extended by one constant bit (e.g. 1) from each of the two ends.

This is further illustrated using an example with two bit errors, one of them in a data bit and another one in a parity bit. When the sequence S2 is received, the following sequence is started:

1) An array is created to hold two likelihood counters for each data bit. The first counter L0 is intended to count observations indicating that the corresponding bit should be zero. The second counter L1 counts observations indicating that the corresponding bit should be one. Both counters are first set to zero.

2) The bit value of the first bit i.e. the first data bit a is the first observation. If this bit is a 0, then counter L0 for the first data bit is incremented by 1, otherwise counter L1 is incremented by 1.

3) Next the two following bits i.e the first parity bit $\genfrac{}{}{0pt}{}{a}{b}$ and the second data bit $b$ are read. Then the first data bit a and second data bit b are compared by an XOR operation and the result is further compared to received first parity bit $\genfrac{}{}{0pt}{}{a}{b}$. If these match then the counter corresponding to the value of a is incremented by 1, if not, then the counter corresponding to the other possible value of a is incremented by 1. In both cases it is still the counter corresponding to the first data bit that is used.

4) The next step is to compute values for the counters L0 and L1 corresponding to the second data bit. This time there are three different indications that can each hint to the correct value of the second data bit b. First of these indications is the value of bit b. As in step 2, depending on the value of bit b, either the counter L0 or L1 is incremented by 1 i.e. if $b=0$ then L0 is incremented by 1, otherwise L1 is incremented.

5) The second indication is the equality of the parity bit $\genfrac{}{}{0pt}{}{a}{b}$ and parity computed from bits a and $b$. Again, if these match, then the counter L0 or L1 corresponding to the value of bit b is incremented by 1. Otherwise, the other counter is incremented.

6) The third indication is the equality of the parity bit $\genfrac{}{}{0pt}{}{b}{c}$ and parity computed from bits b and c. Again, if these match, then the counter L0 or L1 corresponding to the value of bit b is incremented by 1.

7) Each data bit is examined according to steps 2-6. This procedure yields two arrays of likelihoods, L0 and L1.

8) Each data bit having two or three similar indications (L0 or L1 is 3) is accepted as such.

9) Each data bit having two contraindications, i.e. two indications against the received value, is inverted.

10) The first and last data bit are held unchanged. If there is a contraindication the value of the data bit may be considered insecure.

Figure 8 is a diagram of the bytes of a compressed and forward error encoded header 41 in accordance with an embodiment of the invention. The header comprises a sequence of bits formed by three bytes of header data and also three bytes FEC1, FEC2 and FEC3 of error correction data.

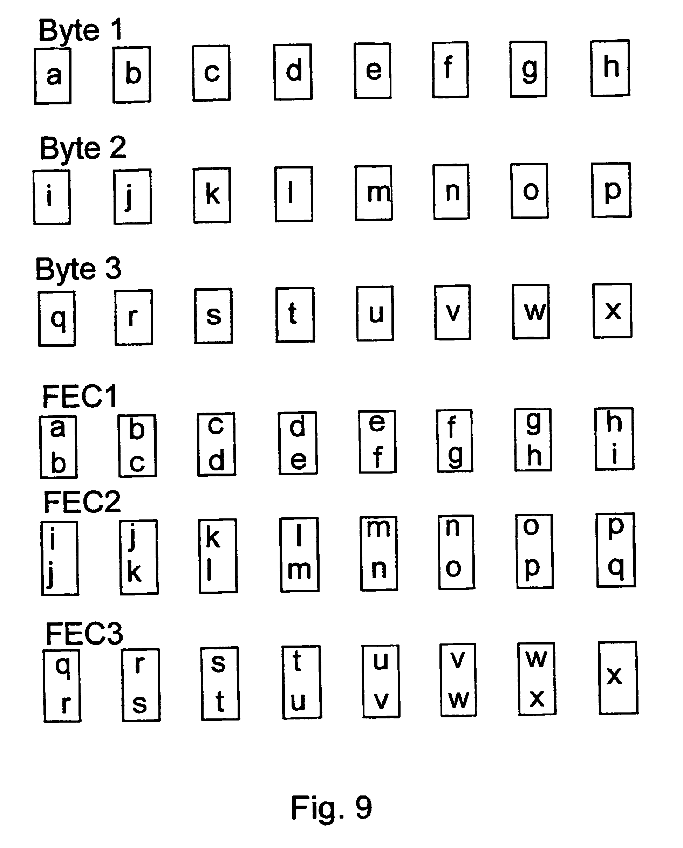

Figure 9 is a diagram of a compressed and forward error encoded header in accordance with figure 8. To illustrate the layout of the bits within the header, the contents of each header data byte is shown as bits marked with letters running from a to x. Each bit of FEC bytes is also marked with letters corresponding to the header data bits from which it is calculated. In the header, the bits are organised in a linear series starting from bit a until the last FEC bit marked with x. The number of FEC bits is 23 in this error correction scheme as a parity bit is formed for each two adjacent bits. To fill the last bit position of the third FEC byte a header data bit can be copied as such, preferably one of the first and last data bits to strengthen its protection against bit errors. Alternatively that last bit position could be padded for example by the first bit of the payload.

According to the invention the telecommunication network also comprises means for decompressing the compressed and FEC encoded headers into a standard form to allow their normal use. This can be implemented in any appropriate part of the network, e.g. at the MSC or BSC, a CPU and memory or specific hardware alike described earlier referring to figure 4.

It will be appreciated by the skilled person that modification may be made to the above described embodiment without departing from the scope of the present invention. For example, more sophisticated forward error correction methods, similar to that described in the US-patent 5870412, may be used instead of the simple XOR-method described above, to obtain better error correction capability with same amount of redundancy.

**Claims**

1. Method for transmitting and further receiving a digital data packet over a transmission path subject to data corruption, said packet comprising a payload and a header, said header comprising a group of bits, said method further comprising the step of:

compressing said group of bits;

**characterised in that** said step of compressing said group of bits comprises inter coding said group of bits and the method further comprises the steps of:

modifying said header by forward error correction, FEC, encoding the compressed group of bits;
sending said data packet over said transmission path;
receiving said data packet;
FEC decoding the compressed group of bits; and
decompressing the compressed group of bits to regenerate said header.

2. Method for transmitting a digital data packet over a transmission path subject to data corruption, said packet comprising a payload and a header, said header comprising a group of bits, said method comprising the step of:

compressing said group of bits,

**characterised in that** said step of compressing said group of bits comprises inter coding said group of bits and said method further comprises the steps of: modifying said header by forward error correction, FEC, encoding the compressed group of bits; and sending said data packet over said transmission path after the error correction encoding.

3. Method for receiving a compressed digital data packet comprising a header and a payload, said header comprising a group of bits, said method comprising the step of:

receiving a data packet comprising said header where said group of bits is compressed and forward error correction, FEC, encoded;
**characterised in that** said method further comprises the steps of:
decoding said forward error correction encoded group of bits; and
decompressing said compressed group of bits, wherein said group of bits is inter coded and said step of decompressing said compressed group of bits comprises decoding the inter coded group of bits.

4. Method according to claim 1 or 2, **characterised in that** said transmission path is a channel of a mobile telecommunications path and said data corruption is caused by radio interference.

5. Method according to any one of preceding claims, **characterised in that** said payload comprises real-time communication data.

**6.** Digital radio telephone network (MNW) for transferring a digital data packet (P1) over a transmission path (Um) subject to data corruption, said packet comprising a payload (12) and a header (11), said header comprising a group of bits (30), said network comprising:

means for compressing (CPU,MEM) said header by compressing said group of bits;
**characterised by** said means for compressing said header being inter coding means and by said network further comprising: means (CPU) for forward error correction, FEC, encoding of said compressed group of bits (30) for protecting said header against a bit error in said compressed group of bits;
means (TX,DPX,AER) for sending said data packet over said transmission path;
means (RX,DPX,AER) for receiving said data packet;
means (CPU,MEM) for decoding said FEC encoded group of bits; and
means (CPU,MEM) for decompressing said header.

**7.** Digital radio telephone network according to claim 6, **characterised in that** said transmission path is a channel of a mobile telecommunications path and said data corruption is caused by radio interference.

**8.** Digital radio telephone network according to claim 6 or 7, **characterised in that** said network comprises:

means for detecting (CPU,MEM) corruption of said group in connection with reception of the data packet, and
said means (CPU,MEM) for decoding being arranged to recover said group of bits in case said group of bits is corrupted.

**9.** Digital radio telephone network according to any of claims 6 to 8, **characterised in that** said payload (12) comprises real-time communication data.

**10.** Digital data transmitter (TX) for transmitting a digital data packet (P1) over a transmission path (Um) subject to data corruption, said packet comprising a payload (12) and a header (11), said header comprising a group of bits (30), said transmitter comprising:

means (CPU,MEM) for compressing said group;

**characterised in that** said means for compressing said group of bits is inter coding means and said transmitter further comprises:

means (CPU,MEM) for error correction encoding of said compressed group of bits (30) using a forward error correction, FEC, method; and
means (TX,DPX,AER) for sending said data packet over said transmission path.

**11.** A digital data transmitter according to claim 10, **characterised in that** said transmission path is a channel of a mobile telecommunications path and said data corruption is caused by radio interference.

**12.** A digital data transmitter according to claim 10 or 11, **characterised in that** said payload (12) comprises real-time communication data.

**13.** Digital data receiver (RX) for receiving a digital data packet (P1) sent over a digital transmission path (Um) subject to data corruption, said packet comprising a payload (12) and a header (11), said header comprising a group of bits (30), said receiver comprising:

means (RX,DPX,AER,CPU,MEM) for receiving a data packet comprising a header where said group of bits is compressed and forward error correction encoded;

**characterised in that** said header of the received data packet is compressed by inter coding and said receiver further comprises: means (CPU,MEM) for decoding said forward error corrected encoded group of bits decoding said forward error corrected group of bits; and
means (CPU,MEM) for decompressing said group of bits.

**14.** Digital data receiver (RX) according to claim 13, **characterised in that** said transmission path is a channel of a mobile telecommunications path and said data corruption is caused by radio interference.

**15.** Digital data receiver according to claim 13 or 14, **characterised in that** said receiver comprises:

means for detecting (CPU,MEM) corruption of said group of bits in connection with reception of the data packet, and
said means for decoding said group of bits being arranged for recovering said group of bits by said decoding in case said group is corrupted.

**16.** Digital data receiver according to any of claims 13 to 15, **characterised in that** said payload (12) comprises real-time communication data.

**17.** Mobile station (MS) comprising a digital data transmitter (TX) for transmitting a digital data packet (P1) over a transmission path (Um) subject to data corruption, said packet comprising a payload (12) and a header (11), said header comprising a group of bits (30), said mobile station comprising:

means (CPU,MEM) for compressing said group;

**characterised in that** said means for compressing said group of bits is inter coding means and said mobile station further comprises:

means (CPU,MEM) for error correction encoding of said compressed group of bits (30) using a forward error correction, FEC, method; and means (TX,DPX,AER) for sending said data packet over said transmission path.

18. A mobile station (MS) according to claim 17, **characterised in that** the transmission path is a channel of a mobile telecommunications path and said data corruption is caused by radio interference.

19. A mobile station (MS) according to claim 17 or 18, **characterised in that** the payload (12) comprises real-time communication data.

20. Mobile station (MS) comprising a digital data receiver (RX) for receiving a digital data packet (P1) sent over a digital transmission path (Um) subject to data corruption, said packet comprising a payload (12) and a header (11), said header comprising a group of bits (30), said mobile station comprising:

means (RX,DPX,AER,CPU,MEM) for receiving a data packet comprising a header where said group of bits is compressed and forward error correction encoded;

**characterised in that** said header of the received data packet is compressed by inter coding and said mobile station further comprises:

means (CPU,MEM) for decoding said forward error corrected encoded group of bits decoding said forward error corrected group of bits; and means (CPU,MEM) for decompressing said group of bits.

21. Mobile station (MS) according to claim 20, **characterised in that** said transmission path is a channel of a mobile telecommunications path and said data corruption is caused by radio interference.

22. Mobile station (MS) according to claim 20 or 21, **characterised in that** said mobile station comprises:

means for detecting (CPU,MEM) corruption of said group of bits on or after reception of the data packet, and said means for decoding said group of bits being arranged for recovering said group of bits by said decoding in case said group is corrupted.

23. Mobile station (MS) according to any of claims 20 to 22, **characterised in that** said payload (12) comprises real-time communication data.

24. Packet data network element for error resilient communications, comprising means (RX) for receiving a digital data packet (P1) sent over a digital transmission path (Abis,A, Gb,Gs,Gi), said packet comprising a payload (12) and a header (11), said header comprising a group of bits (30), said element comprising:

means for receiving a data packet comprising a header where said group of bits is compressed and forward error correction encoded;

**characterised in that** said header of the received data packet is compressed by inter coding and said element further comprises:

means for decoding said forward error corrected encoded group of bits decoding said forward error corrected group of bits; and means (CPU,MEM) for decompressing said group of bits.

25. Packet data network element according to claim 24, **characterised in that** said element is selected from a group consisting of: Gateway GPRS support node, Serving GPRS support node, Mobile switching centre, a router and a firewall.

26. Packet data network element according to claim 24 or 25, **characterised in that** said element comprises:

means for detecting (CPU,MEM) corruption of said group of bits on or after reception of the data packet, and said means for decoding said group of bits being arranged for recovering said group of bits by said decoding in case said group is corrupted.

27. Packet data network element according to any of claims 24 to 26, **characterised in that** payload (12) comprises real-time communication data.

28. Packet data network element for error resilient communications, comprising means for transmitting a digital data packet (P1) over a transmission path (Abis,A,Gb,Gs,Gi), said packet comprising a payload (12) and a header (11), said header comprising a group of bits (30), said element comprising:

means (CPU,MEM) for compressing said group;

**characterised in that** said means for compressing said group of bits is inter coding means and said element further comprises:

means (CPU,MEM) for error correction encoding of said compressed group of bits (30) using a forward error correction, FEC, method; and means for sending said data packet over said transmission path.

29. A packet data network element according to claim 28, **characterised in that** the payload (12) comprises real-time communication data.

30. Packet data network element according to claim 28 or 29, **characterised in that** said element is selected from a group consisting of: Gateway GPRS support node (GGSN), Serving GPRS support node (SGSN), Mobile switching centre (MSC), a router and a firewall.

**Patentansprüche**

1. Verfahren zum Übertragen und ferner Empfangen eines digitalen Datenpakets über ein Übertragungspfad, der einer Datenkorrumpierung unterworfen ist, wobei das Paket Nutzdaten und einen Header umfasst, wobei der Header eine Gruppe von Bits umfasst, wobei das Verfahren ferner die Schritte umfasst:

Komprimieren der Gruppe von Bits;

**dadurch gekennzeichnet, dass** der Schritt der Komprimierung der Gruppe von Bits Interkodieren der Gruppe von Bits umfasst und das Verfahren ferner die Schritte umfasst:

Modifizieren des Headers durch vorwärtsgerichtete Fehlerkorrektur, FEC, Kodieren der komprimierten Gruppe von Bits; Senden des Datenpakets über den Übertragungspfad; Empfangen des Datenpakets; FEC-Dekodieren der komprimierten Gruppe von Bits; und Dekomprimieren der komprimierten Gruppe von Bits, um den Header zu regenerieren.

2. Verfahren zum Übertragen eines digitalen Datenpakets über ein Übertragungspfad, der einer Datenkorrumpierung unterworfen ist, wobei das Paket Nutzdaten und einen Header umfasst, wobei der Header eine Gruppe von Bits umfasst, wobei das Verfahren die Schritte umfasst:

Komprimieren der Gruppe von Bits; **dadurch gekennzeichnet, dass** der Schritt der Komprimierung der Gruppe von Bits Interkodieren der Gruppe von Bits umfasst und das Verfahren ferner die Schritte umfasst: Modifizieren des Headers durch vorwärtsgerichtete Fehlerkorrektur, FEC, Kodieren der komprimierten Gruppe von Bits; und Senden des Datenpakets nach dem Fehlerkorrekturkodieren über den Übertragungspfad.

3. Verfahren zum Empfangen eines komprimierten digitalen Datenpakets, das einen Header und Nutzdaten umfasst, wobei der Header eine Gruppe von Bits umfasst, wobei das Verfahren die Schritte umfasst:

Empfangen eines Datenpakets, das den Header umfasst, wobei die Gruppe von Bits komprimiert und durch vorwärtsgerichtete Fehlerkorrektur, FEC, kodiert ist;

**dadurch gekennzeichnet, dass** das Verfahren ferner die Schritte umfasst:

Dekodieren der durch vorwärtsgerichtete Fehlerkorrektur kodierten Gruppe von Bits; und Dekomprimieren der komprimierten Gruppe von Bits, wobei der Gruppe von Bits interkodiert ist und der Schritt des Dekomprimierens der komprimierten Gruppe von Bits Dekodieren der interkodierten Gruppe von Bits umfasst.

4. Verfahren gemäß Anspruch 1 oder 2, **dadurch gekennzeichnet, dass** der Übertragungspfad ein Kanal eines mobilen Telekommunikationspfads ist und die Datenkorrumpierung durch Funkinterferenzen verursacht wird.

5. Verfahren gemäß irgendeinem der vorhergehenden Ansprüche, **dadurch gekennzeichnet, dass** die Nutzdaten Echtzeit-Kommunikationsdaten umfassen.

6. Digitales Funktelefonnetzwerk (MNW) zum Übertragen eines digitalen Datenpakets (P1) über einen Übertragungspfad (Um), der einer Datenkorrumpierung unterworfen ist, wobei das Paket Nutzdaten (12) und einen Header (11) umfasst, wobei der Header eine Gruppe von Bits (30) umfasst, wobei das Netzwerk umfasst:

Mittel zum Komprimieren (CPU, MEM) des Headers durch Komprimieren der Gruppe von Bits;

**gekennzeichnet durch** die Mittel zum Komprimieren das Headers, die Intercodier-Mittel sind, und **durch** das Netzwerk, das ferner umfasst: Mittel (CPU) zum **durch** vorwärtsgerichtete Fehlerkorrektur, FEC, Kodieren der komprimierten Gruppe von Bits (30), um den Header gegen einen Bitfehler in der komprimierten Gruppe von Bits zu schützen;
Mittel (TX, DPX, AER) zum Senden des Datenpakets über den Übertragungspfad;
Mittel (RX, DPX, AER) zum Empfangen des Datenpakets;
Mittel (CPU, MEM) zum Dekodieren der FEC-kodierten Gruppe von Bits; und
Mittel (CPU, MEM) zum Dekomprimieren des Headers.

7.  Digitales Funktelefonnetzwerk gemäß Anspruch 6, **dadurch gekennzeichnet, dass** der Übertragungspfad ein Kanal eines mobilen Telekommunikationspfads ist und die Datenkorrumpierung durch Funkinterferenzen verursacht wird.

8.  Digitales Funktelefonnetzwerk gemäß Anspruch 6 oder 7, **dadurch gekennzeichnet, dass** das Netzwerk umfasst:

   Mittel zum Erfassen (CPU, MEM) einer Korrumpierung der Gruppe von Bits in Verbindung mit einem Empfang des Datenpakets; und

   wobei die Mittel (CPU, MEM) zum Dekodieren eingerichtet sind, die Gruppe von Bits wiederherzustellen im Fall, dass die Gruppe von Bits korrumpierte ist.

9.  Digitales Funktelefonnetzwerk gemäß irgendeinem der Ansprüche 6 bis 8, **dadurch gekennzeichnet, dass** die Nutzdaten (12) Echtzeit-Kommunikationsdaten umfassen.

10. Digitaler Datensender (TX) zum Übertragen eines digitalen Datenpakets (P1) über einen Übertragungspfad (Um), der einer Datenkorrumpierung unterworfen ist, wobei das Paket Nutzdaten (12) und einen Header (11) umfasst, wobei der Header eine Gruppe von Bits (30) umfasst, wobei das Datensender umfasst:

   Mittel (CPU, MEM) zum Komprimieren der Gruppe;

   **dadurch gekennzeichnet, dass** die Mittel zum Komprimieren der Gruppe von Bits Interkodier-Mittel sind und der Sender ferner umfasst:

   Mittel (CPU, MEM) zum Fehlerkorrekturkodieren der komprimierten Gruppe von Bits (30) unter Verwendung eines Verfahrens zur vorwärtsgerichteten Fehlerkorrektur, FEC, und
   Mittel (TX, DPX, AER) zum Senden des Datenpakets über den Übertragungspfad.

11. Digitaler Datensender gemäß Anspruch 10, **da-**

**durch gekennzeichnet, dass** der Übertragungspfad ein Kanal eines mobilen Telekommunikationspfads ist und die Datenkorrumpierung durch Funkinterferenzen verursacht wird.

12. Digitaler Datensender gemäß Anspruch 10 oder 11, **dadurch gekennzeichnet, dass** die Nutzdaten (12) Echtzeit-Kommunikationsdaten umfassen.

13. Digitaler Datenempfänger (RX) zum Empfangen eines digitalen Datenpakets (P1), das über einen digitalen Übertragungspfad (Um) gesendet wird, der einer Datenkorrumpierung unterworfen ist, wobei das Paket Nutzdaten (12) und einen Header (11) umfasst, wobei der Header eine Gruppe von Bits (30) umfasst, wobei das Empfänger umfasst:

   Mittel (RX, DPX, AER, CPU, MEM) zum Empfangen eines Datenpakets, das einen Header umfasst, wobei die Gruppe von Bits komprimiert und durch vorwärtsgerichtete Fehlerkorrektur kodiert ist;

   **dadurch gekennzeichnet, dass** der Header des empfangenen Datenpakets durch Interkodieren komprimiert ist und der Empfänger ferner umfasst:
   Mittel (CPU, MEM) zum Dekodieren der vorwärtsgerichtet-fehlerkorrigierten kodierten Gruppe von Bits, Dekodieren der vorwärtsgerichtet-fehlerkorrigierten Gruppe von Bits; und
   Mittel (CPU, MEM) zum Dekomprimieren der Gruppe von Bits.

14. Digitaler Datenempfänger (RX) gemäß Anspruch 13, **dadurch gekennzeichnet, dass** der Übertragungspfad ein Kanal eines mobilen Telekommunikationspfads ist und die Datenkorrumpierung durch Funkinterferenzen verursacht wird.

15. Digitaler Datenempfänger gemäß Anspruch 13 oder 14, **dadurch gekennzeichnet, dass** der Empfänger umfasst:

   Mittel zum Erfassen (CPU, MEM) einer Korrumpierung der Gruppe von Bits in Verbindung mit einem Empfang des Datenpakets; und

   wobei die Mittel zum Dekodieren der Gruppe von Bits zum Wiederherstellen der Gruppe von Bits durch das Dekodieren im Fall, dass die Gruppe korrumpierte ist, eingerichtet sind.

16. Digitaler Datenempfänger gemäß irgendeinem der Ansprüche 13 bis 15, **dadurch gekennzeichnet, dass** die Nutzdaten (12) Echtzeit-Kommunikationsdaten umfassen.

17. Mobilstation (MS), die einen digitalen Datensender (TX) zum Übertragen eines digitalen Datenpakets (P1) über einen Übertagungspfad (Um) umfasst, der einer Datenkorrumpierung unterworfen ist, wobei das Paket Nutzdaten (12) und einen Header (11) umfasst, wobei der Header eine Gruppe von Bits (30) umfasst, wobei die Mobilstation umfasst:

Mittel (CPU, MEM) zum komprimieren der Gruppe;

**dadurch gekennzeichnet, dass** die Mittel zum Komprimieren der Gruppe von Bits Interkodier-Mittel sind und die Mobilstation ferner umfasst:

Mittel (CPU, MEM) zum Fehlerkorrekturkodieren der komprimierten Gruppe von Bits (30) unter Verwendung eines Verfahrens zur vorwärtsgerichteten Fehlerkorrektur, FEC, und
Mittel (TX, PDX, AER) zum Senden des Datenpakets über den Übertragungspfad.

18. Mobilstation (MS) gemäß Anspruch 17, **dadurch gekennzeichnet, dass** der Übertragungspfad ein Kanal eines mobilen Telekommunikationspfads ist und die Datenkorrumpierung durch Funkinterferenzen verursacht wird.

19. Mobilstation (MS) gemäß Anspruch 17 oder 18, **dadurch gekennzeichnet, dass** die Nutzdaten (12) Echtzeit-Kommunikationsdaten umfassen.

20. Mobilstation (MS), die einen digitalen Datenempfänger (RX) zum Empfangen eines digitalen Datenpakets (P1) umfasst, das über einen digitalen Übertragungspfad (Um) gesendet wird, der einer Datenkorrumpierung unterworfen ist, wobei das Paket Nutzdaten (12) und einen Header (11) umfasst, wobei der Header eine Gruppe von Bits (30) umfasst, wobei die Mobilstation umfasst:

Mittel (RX, DPX, AER, CPU, MEM) zum Empfangen eins digitalen Datenpakets, das einen Header umfasst, wobei die Gruppe von Bits komprimiert und durch vorwärtsgerichtete Fehlerkorrektur kodiert ist;

**dadurch gekennzeichnet, dass** der Header des empfangenen Pakets durch Interkodieren komprimiert ist und die Mobilstation ferner umfasst:

Mittel (CPU, MEM) zum Dekodieren der vorwärtsgerichtet-fehlerkorrigierten kodierten; Gruppe von Bits, Dekodieren der vorwärtsgerichtet-fehlerkorrigierten Gruppe von Bits; und
Mittel (CPU, MEM) zum Dekomprimieren der Gruppe von Bits.

21. Mobilstation (MS) gemäß Anspruch 20, **dadurch gekennzeichnet, dass** der Übertragungspfad ein Kanal eines mobilen Telekommunikationspfads ist und die Datenkorrumpierung durch Funkinterferenzen verursacht wird.

22. Mobilstation (MS) gemäß Anspruch 20 oder 21, **dadurch gekennzeichnet, dass** die Mobilstation umfasst:

Mittel zum Erfassen (CPU, MEM) einer Korrumpierung der Gruppe von Bits bei oder nach einem Empfang des Datenpakets; und

wobei die Mittel zum Dekodieren der Gruppe eingerichtet sind, um die Gruppe von Bits durch das Dekodieren im Fall, dass die Gruppe korrumpierte ist, wiederherzustellen.

23. Mobilstation (MS) gemäß irgendeinem der Ansprüche 20 bis 22, **dadurch gekennzeichnet, dass** die Nutzdaten (12) Echtzeit-Kommunikationsdaten umfassen.

24. Paketdatennetzwerkelement zur fehlertolerante Kommunikation, das Mittel (RX) zum Empfangen eines digitalen Datenpaket (P1) umfasst, das über einen digitalen Übertragungspfad (Abis, A, Gb, Gs, Gi) gesendet wird, wobei das Paket Nutzdaten (12) und einen Header (11) umfasst, wobei der Header eine Gruppe von Bits (30) umfasst, wobei das Element umfasst:

Mittel zum Empfangen eines Datenpakets, das einen Header umfasst, wobei die Gruppe von Bits komprimiert und durch vorwärtsgerichtete Fehlerkorrektur kodiert ist;

**dadurch gekennzeichnet, dass** der Header des empfangenen Datenpakets durch Interkodieren komprimiert ist und das Element ferner umfasst:

Mittel zum Dekodieren der vorwärtsgerichtet-fehlerkorrigierten kodierten Gruppe von Bits, Dekodieren der vorwärtsgerichtet-fehlerkorrigierten Gruppe von Bits; und
Mittel (CPU, MEM) zum Dekomprimieren der Gruppe von Bits.

25. Paketdatennetzwerkelement gemäß Anspruch 24, **dadurch gekennzeichnet, dass** das Element ausgewählt ist aus einer Gruppe bestehend aus: einem Gateway GPRS Support Node, einem Serving GPRS Support Node, einem Mobile Switching Center, einem Router und einer Firewall.

26. Paketdatennetzwerkelement gemäß Anspruch 24 oder 25, **dadurch gekennzeichnet, dass** das Element umfasst:

Mittel zum Erfassen (CPU, MEM) einer Korrumpierung der Gruppe von Bits bei oder nach einem Empfang des Datenpakets; und

wobei die Mittel zum Dekodieren der Gruppe von Bits zum Wiederherzustellen der Gruppe von Bits durch Dekodieren im Fall, dass die Gruppe von Bits korrumpierte ist, eingerichtet sind.

27. Paketdatennetzwerkelement gemäß irgendeinem der Ansprüche 24 bis 26, **dadurch gekennzeichnet, dass** die Nutzdaten (12) Echtzeit-Kommunikationsdaten umfassen.

28. Paketdatennetzwerkelement zur fehlertolerante Kommunikation, das Mittel zum Übertragen eines digitalen Datenpakets (P1) über einen digitalen Übertragungspfad (Abis, A, Gb, Gs, Gi) umfasst, wobei das Paket Nutzdaten (12) und einen Header (11) umfasst, wobei der Header eine Gruppe von Bits (30) umfasst, wobei das Element umfasst:

Mittel (CPU, MEM) zum Komprimieren der Gruppe;

**dadurch gekennzeichnet, dass** die Mittel zum Komprimieren der Gruppe von Bits Interkodier-Mittel sind und das Element ferner umfasst:

Mittel (CPU, MEM) zum Fehlerkorrekturkodieren der komprimierten Gruppe von Bits (30) unter Verwendung eines Verfahrens zur vorwärtsgerichteten Fehlerkorrektur, FEC, und
Mittel zum Senden des Datenpakets über den Übertragungspfad.

29. Paketdatennetzwerkelement gemäß Anspruch 28, **dadurch gekennzeichnet, dass** die Nutzdaten (12) Echtzeit-Kommunikationsdaten umfassen.

30. Paketdatennetzwerkelement gemäß Anspruch 28 oder 29, **dadurch gekennzeichnet, dass** das Element ausgewählt ist aus einer Gruppe bestehend aus: einem Gateway GPRS Support Node, einem Serving GPRS Support Node, einem Mobile Switching Center, einem Router und einer Firewall.

**Revendications**

1. Procédé de transmission et également de réception de paquets de données numériques sur un chemin de transmission soumis à une altération de données, ledit paquet comprenant une charge utile et un entête, ledit en-tête comprenant un groupe de bits, ledit procédé comprenant en outre l'étape consistant à:

compresser ledit groupe de bits ;

**caractérisé en ce que** ladite étape de compression dudit groupe de bits comprend un inter codage dudit groupe de bits et le procédé comprend en outre les étapes consistant à :

modifier ledit en-tête par correction d'erreurs sans voie de retour, FEC, en codant le groupe compressé de bits ;
envoyer ledit paquet de données sur ledit chemin de transmission ;
recevoir ledit paquet de données ;
décoder par FEC le groupe compressé de bits ; et
décompresser le groupe compressé de bits pour régénérer ledit en-tête.

2. Procédé de transmission d'un paquet de données numériques sur un chemin de transmission soumis à une altération de données, ledit paquet comprenant une charge utile et un en-tête, ledit en-tête comprenant un groupe de bits, ledit procédé comprenant l'étape consistant à :

compresser ledit groupe de bits ;

**caractérisé en ce que** ladite étape de compression dudit groupe de bits comprend un inter codage dudit groupe de bits et ledit procédé comprend en outre les étapes consistant à : modifier ledit en-tête par correction d'erreurs sans voie de retour, FEC, en codant le groupe compressé de bits ; et
envoyer ledit paquet de données sur ledit chemin de transmission après le codage de la correction d'erreurs.

3. Procédé de réception d'un paquet de données numériques compressées comprenant un en-tête et une charge utile, ledit en-tête comprenant un groupe de bits, ledit procédé comprenant l'étape consistant à :

recevoir un paquet de données comprenant ledit en-tête dans lequel ledit groupe de bits est compressé et la correction sans voie de retour, FEC, codée ;

**caractérisé en ce que** ledit procédé comprend en outre les étapes consistant à : décoder ledit groupe de bits codé de la correction d'erreurs sans voie de retour, et
décompresser ledit groupe de bits compressé, dans lequel ledit groupe de bits est inter codé et ladite étape de décompression dudit groupe de bits compressés comprend le décodage du groupe de bits inter codé.

4. Procédé selon la revendication 1 ou 2, **caractérisé en ce que** ledit chemin de transmission est un canal d'un chemin de télécommunications mobiles et ladite altération de données est provoquée par une interférence radio.

5. Procédé selon l'une quelconque des revendications précédentes, **caractérisé en ce que** ladite charge utile comprend des données de communication en temps réel.

6. Réseau de téléphone radio numérique (MNW) destiné à transférer un paquet de données numériques (P1) sur un chemin de transmission (Um) soumis à une altération de données, ledit paquet comprenant une charge utile (12) et un en-tête (11), ledit en-tête comprenant un groupe de bits (30), ledit réseau comprenant :

> un moyen pour la compression (CPU, MEM) dudit en-tête par compression des groupes de bits ;

> **caractérisé en ce que** ledit moyen de compression dudit en-tête est un moyen d'inter codage et **en ce que** ledit réseau comprend en outre : un moyen (CPU) de correction d'erreurs sans voie de retour, FEC, en codant ledit groupe de bits compressés (30) pour protéger ledit en-tête contre une erreur de bit dans ledit groupe de bits compressés ;
> un moyen (TX, DPX, AER) pour envoyer ledit paquet de données sur ledit chemin de transmission ;
> un moyen (RX, DPX, AER) pour recevoir ledit paquet de données ;
> un moyen (CPU, MEM) pour décoder ledit groupe de bits codés FEC ; et
> un moyen (CPU, MEM) pour décompresser ledit en-tête.

7. Réseau de téléphone radio numérique selon la revendication 6, **caractérisé en ce que** ledit chemin de transmission est un canal d'un chemin de télécommunications mobiles et ladite altération de données est provoquée par une interférence radio.

8. Réseau de téléphone radio numérique selon la revendication 6 ou 7, **caractérisé en ce que** ledit réseau comprend :

> un moyen de détection (CPU, MEM) de l'altération dudit groupe en connexion avec la réception du paquet de données, et
> ledit moyen (CPU, MEM) de décodage étant conçu pour récupérer ledit groupe de bits au cas où ledit groupe de bits est altéré.

9. Réseau de téléphone radio numérique selon l'une quelconque des revendications 6 à 8, **caractérisé en ce que** ladite charge utile (12) comprend des données de communication en temps réel.

10. Emetteur de données numériques (TX) pour transmettre un paquet de données numériques (P1) sur un chemin de transmission (Um) soumis à une altération de données, ledit paquet comprenant une charge utile (12) et un en-tête (11), ledit en-tête comprenant un groupe de bits (30), ledit émetteur comprenant :

> un moyen (CPU, MEM) pour compresser ledit groupe ;

> **caractérisé en ce que** ledit moyen pour compresser ledit groupe de bits est un moyen d'inter codage et ledit émetteur comprend en outre :

> un moyen (CPU, MEM) pour le codage de la correction d'erreurs dudit groupe de bits compressés (30) en utilisant un procédé de correction d'erreurs sans voie de retour, FEC ; et
> un moyen (TX, DPX, AER) pour envoyer ledit paquet de données sur ledit chemin de transmission.

11. Emetteur de données numériques selon la revendication 10, **caractérisé en ce que** ledit chemin de transmission est un canal d'un chemin de télécommunications mobiles et ladite altération de données est provoquée par une interférence radio.

12. Emetteur de données numériques selon la revendication 10 ou 11, **caractérisé en ce que** ladite charge utile (12) comprend des données de communication en temps réel.

13. Récepteur de données numériques (RX) destiné à recevoir un paquet de données numériques (P1) envoyé sur un chemin de transmission numérique (Um) soumis à une altération de données, ledit paquet comprenant une charge utile (12) et un en-tête (11), ledit en-tête comprenant un groupe de bits (30), ledit récepteur comprenant :

> un moyen (RX, DPX, AER, CPU, MEM) pour recevoir un paquet de données comprenant un en-tête dans lequel ledit groupe de bits est compressé et la correction d'erreurs sans voie de retour codée ;

> **caractérisé en ce que** ledit en-tête du paquet de données reçu est compressé par inter codage et ledit récepteur comprend en outre : un moyen (CPU, MEM) pour décoder ledit groupe de bits codés d'erreurs corrigées sans voie de retour décodant ledit groupe de bits d'erreurs corrigées sans voie de retour ; et
> un moyen (CPU, MEM) pour décompresser ledit groupe de bits.

**14.** Récepteur de données numériques (RX) selon la revendication 13, **caractérisé en ce que** ledit chemin de transmission est un canal d'un chemin de télécommunications mobiles et ladite altération de données est provoquée par une interférence radio.

**15.** Récepteur de données numériques selon la revendication 13 ou 14, **caractérisé en ce que** ledit récepteur comprend :

un moyen pour détecter (CPU, MEM) l'altération dudit groupe de bits en connexion avec la réception du paquet de données, et
ledit moyen pour décoder ledit groupe de bits étant conçu pour récupérer ledit groupe de bits au moyen dudit décodage au cas où ledit groupe de bits est altéré.

**16.** Récepteur de données numériques selon l'une quelconque des revendications 13 à 15, **caractérisé en ce que** ladite charge utile (12) comprend des données de communication en temps réel.

**17.** Station mobile (MS) comprenant un émetteur de données numériques (TX) destiné à transmettre un paquet de données numériques (P1) sur un chemin de transmission (Um) soumis à une altération de données, ledit paquet comprenant une charge utile (12) et un en-tête (11), ledit en-tête comprenant un groupe de bits (30), ladite station mobile comprenant :

un moyen (CPU,MEM) pour compresser ledit groupe ;

**caractérisée en ce que** ledit moyen de compression dudit groupe de bits est un moyen d'inter codage et ladite station mobile comprend en outre :

un moyen (CPU,MEM) pour le codage de la correction d'erreurs dudit groupe de bits compressés (30) en utilisant un procédé de correction d'erreurs sans voie de retour, FEC; et
un moyen (TX, DPX, AER) pour envoyer ledit paquet de données sur ledit chemin de transmission.

**18.** Station mobile (MS) selon la revendication 17, **caractérisée en ce que** le chemin de transmission est un canal d'un chemin de télécommunications mobiles et ladite altération de données est provoquée par une interférence radio.

**19.** Station mobile (MS) selon la revendication 17 ou 18, **caractérisée en ce que** la charge utile (12) comprend des données de communication en temps réel.

**20.** Station mobile (MS) comprenant un récepteur de données numériques (RX) pour recevoir un paquet de données numériques (P1) envoyées sur un chemin de transmission numérique (Um) soumis à une altération de données, ledit paquet comprenant une charge utile (12) et un en-tête (11), ledit en-tête comprenant un groupe de bits (30), ladite station mobile comprenant :

un moyen (RX, DPX, AER, CPU, MEM) pour recevoir un paquet de données comprenant un en-tête dans lequel ledit groupe de bits est compressé et la correction d'erreurs sans voie de retour codée;

**caractérisée en ce que** ledit en-tête dudit paquet de données reçues est compressé par inter codage et ladite station mobile comprend en outre :

un moyen (CPU, MEM) pour décoder ledit groupe de bits codés d'erreurs corrigées sans voie de retour décodant ledit groupe de bits d'erreurs corrigées sans voie de retour ; et
un moyen (CPU,MEM) pour décompresser ledit groupe de bits.

**21.** Station mobile (MS) selon la revendication 20, **caractérisée en ce que** ledit chemin de transmission est un canal d'un chemin de télécommunications mobiles et ladite altération de données est provoquée par une interférence radio.

**22.** Station mobile (MS) selon la revendication 20 ou 21, **caractérisée en ce que** ladite station mobile comprend :

un moyen pour détecter (CPU, MEM) l'altération dudit groupe de bits au cours de ou après la réception du paquet de données, et
ledit moyen pour décoder ledit groupe de bits étant conçu pour récupérer ledit groupe de bits au moyen dudit décodage au cas où ledit groupe de bits est altéré.

**23.** Station mobile (MS) selon l'une quelconque des revendications 20 à 22, **caractérisée en ce que** ladite charge utile (12) comprend des données de communication en temps réel.

**24.** Elément de réseau de données en paquet pour des communications résilientes à l'erreur, comprenant un moyen (RX) pour recevoir un paquet de données numériques (P1) envoyées sur un chemin de transmission numérique (Abis, A, Gb, Gs, Gi), ledit paquet comprenant une charge utile (12) et un en-tête (11), ledit en-tête comprenant un groupe de bits (30), ledit élément comprenant :

un moyen pour recevoir un paquet de données comprenant un en-tête dans lequel ledit groupe de bits est compressé et la correction d'erreurs sans voie de retour codée ;

**caractérisé en ce que** ledit en-tête du paquet de données reçues est compressé par inter codage et ledit élément comprend en outre :

un moyen pour décoder ledit groupe de bits codés d'erreurs corrigées sans voie de retour décodant ledit groupe de bits d'erreurs corrigées sans voie de retour ; et
un moyen (CPU,MEM) pour décompresser ledit groupe de bits.

25. Elément de réseau de données en paquet selon la revendication 24, **caractérisé en ce que** ledit élément est sélectionné parmi un groupe composé de : un noeud de service de GPRS de transit, un noeud de support GPRS de service, un commutateur de service mobile, un routeur et un pare-feu.

26. Elément de réseau de données en paquet selon la revendication 24 ou 25, **caractérisé en ce que** ledit élément comprend :

un moyen pour détecter (CPU, MEM) l'altération dudit groupe de bits au cours de ou après la réception du paquet de données, et
ledit moyen pour décoder ledit groupe de bits étant conçu pour récupérer ledit groupe de bits au moyen dudit décodage au cas où ledit groupe est altéré.

27. Elément de réseau de données en paquet selon l'une quelconque des revendications 24 à 26, **caractérisé en ce que** la charge utile (12) comprend des données de communication en temps réel.

28. Elément de réseau de données en paquet pour des communications résilientes à l'erreur, comprenant un moyen de transmission d'un paquet de données numériques (P1) sur un chemin de transmission (Abis, A, Gb, Gs, Gi), ledit paquet comprenant une charge utile (12) et un en-tête (11), ledit en-tête comprenant un groupe de bits (30), ledit élément comprenant :

un moyen (CPU,MEM) pour compresser ledit groupe ;

**caractérisé en ce que** ledit moyen pour compresser ledit groupe de bits est un moyen d'inter codage et ledit élément comprend en outre :

un moyen (CPU,MEM) pour le codage de la correction d'erreurs dudit groupe de bits compressés (30) en utilisant un procédé de correction d'erreurs sans voie de retour, FEC; et
un moyen pour envoyer ledit paquet de données sur ledit chemin de transmission.

29. Elément de réseau de données en paquet selon la revendication 28, **caractérisé en ce que** la charge utile (12) comprend des données de communication en temps réel.

30. Elément de réseau de données en paquet selon la revendication 28 ou 29, **caractérisé en ce que** ledit élément est sélectionné parmi un groupe composé de : un noeud de service GPRS de transit (GGSN), un noeud de support GPRS de service (SGSN), un commutateur de service mobile (MSC), un routeur et un pare-feu.

Fig. 1

Fig. 2

Prior
art

Fig. 3

AER

DPX

RX

TX

CPU

MEM

UI

IF

Fig. 4

Prior art

8

7

6

5

4

3

2

1

Header ～31

PB1

PB2

PB3

PB4

Fig. 5

**Byte 1**

| a | b | c | d | e | f | h | i |

**Byte 2**          **Byte 3**

| j $a \atop r$ | k $b \atop s$ | l $c \atop t$ | m $d \atop u$ | n $e \atop v$ | o $f \atop w$ | p $h \atop x$ | q $i \atop y$ |

**Byte 4**          **Byte 5**

| r $j \atop z$ | s $k \atop \alpha$ | t $l \atop \beta$ | u $m \atop \chi$ | v $n \atop \delta$ | w $o \atop \varepsilon$ | x $p \atop \phi$ | y $q \atop \eta$ |

**Byte 6**

| z | $\alpha$ | $\beta$ | $\chi$ | $\delta$ | $\varepsilon$ | $\phi$ | $\eta$ |

Fig. 6

S0:  a, b, c, d, e, f, g, h
     1, 1, 1, 1, 1,1,1, 1

S1:  a, XOR(a,b), b, XOR(b,c), c, XOR(c,d), d,

     XOR(d,e), e, XOR(e,f), f, XOR(f,g), g, XOR(g,h), h
     =    1,0,1,0,1,0,1,0,1,0,1,0,1,0,1

S2: 1,0,1,0,0,0,1,0,1,0,1,0,1,1,1

S3: 1,  1,  1,  1,  1,  1,  1,  1

L1: 2    2    2    2    3    3    2    1
L0: 0    1    1    0    0    0    1    1

## Fig. 7

41

Byte 1  Byte 2  Byte 3  FEC1  FEC2  FEC3

## Fig. 8

**Byte 1**

a b c d e f g h

**Byte 2**

i j k l m n o p

**Byte 3**

q r s t u v w x

**FEC1**

a/b b/c c/d d/e e/f f/g g/h h/i

**FEC2**

i/j j/k k/l l/m m/n n/o o/p p/q

**FEC3**

q/r r/s s/t t/u u/v v/w w/x x

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5870412 A

**Non-patent literature cited in the description**

- **V. JACOBSON.** Compressing TCP/IP Headers for Low-Speed Serial Links. *Compressing TCP/IP Headers for Low-Speed Serial Links,* February 1990

- **S. CASNER ; V. JACOBSON.** *Compressing IP/UDP/RTP Headers for Low -Speed Serial Links,* 27 July 1998
- **MAMAIS.** Evaluation of the Casner-Jacobson Algorithm for Compressing the RTP/UDP/IP Headers. *IS-CC '98. proceedings,* 1998, 543-548